# EUROPEAN PATENT APPLICATION

(11) **EP 4 509 197 A1**
(43) Date of publication of application: **19.02.2025**
(21) Application number: 23382849.0
(22) Date of filing: 14.08.2023
(51) Int. Cl.: B01D 1/00, B01D 1/10, B01D 1/22, B01D 3/04, B01D 3/10

(54) **A VACUUM EVAPORATION DEVICE AND SYTEM COMPRISING THE VACUUM EVAPORATION DEVICE**

(71) Applicant: Ikera RD8 Centro de Investigacion, S.L., 08028 Barcelona (ES)
(72) Inventor: FERNÁNDEZ PUENTE, Carlos, E-43881 Cunit, Tarragona (ES)
(74) Representative: ABG Intellectual Property Law, S.L.

(57) **Abstract**

The present invention relates to a vacuum evaporator device and system for separation of products, in particular water-based products, by-products and waste, into a non-volatile fraction and a volatile fraction.

The vacuum evaporation device comprises a tubular member, heating means for heating at least a part of the outer surface of the tubular member, and a stirrer disposed along at least a part of the interior of the tubular member. The tubular member has first and second closed ends such that a substantially airtight chamber is formed in the interior of the tubular member; the tubular member further comprises: an inlet for the entry of the product, a first outlet for the discharge of the non-volatile fraction and a second outlet for the exit of the volatile fraction.

## Description

### FIELD OF THE INVENTION

The present invention falls in the field of vacuum evaporators for solid-liquid separation of products, in particular water-based products, by-products and waste. More specifically, the present invention relates to a vacuum evaporator device and system for solid-liquid separation of products, in particular water-based products, by-products and waste.

### BACKGROUND OF THE INVENTION

Solid-liquid separation refers to several types of technologies known to separate the volatile and non-volatile fractions of currently mixed water-based products, by-products and waste in order to reduce and/or recuperate the water contained therein and/or recuperate the non-volatile fractions contained in an original product, by-product or waste.

The most common water-based products, by-products and waste that industry needs to be separate are seawater, industrial wastewater, industrial sludges and concentrates (a form of wastewater with a lower water percentage), animal manure (such as chicken, cow and pig excrement), bio-waste from food and beverage production (vegetable milk okara, fruit and vegetable peels, blood, animal remains...) and many other water-based examples.

The most common solid-liquid separation technologies are vacuum evaporation, filter presses and drying trammels, reverse osmosis and physical-chemical treatment plants. Depending on the water-based product, by-product and waste to be separated, a specific technology will be selected from among those available, as no available technology can perform across all water-based products, by-products and waste.

The present invention focuses on vacuum evaporation. Vacuum evaporation is a technique that consists in removing the air in a boiling chamber (also referred to in this document as the vacuum evaporation device) of a vacuum evaporation system reaching a pressure that is lower than atmospheric pressure, and then a higher temperature is applied in order to evaporate the volatile fraction, mainly water, of the product, leaving the original product with a lower amount of water than originally introduced.

However, the non-volatile fraction obtained after the evaporation process by known vacuum evaporation devices and systems usually still contains a large amount of water, of around 30% or more, commonly referred to as a sludge or concentrate. In most cases, this non-volatile fraction cannot be reused and is very often still considered as waste, with the associated hazards and costs. The use of higher temperatures to improve evaporation can often have a negative effect, as the non-volatile fraction might lose natural properties such as aroma and vitamins in the case of organic waste, or become rock hard, making it untreatable.

There are several types of vacuum evaporator systems on the market, all of which use vacuum for evaporation. They all have, among other components, large pot-shaped boiling chambers in which the product to be treated is typically processed in batches. These known vacuum evaporator devices and systems are inefficient in heat transfer, mainly due to the pot shape of the boiling chamber.

The known types of solid-liquid separation technologies have several drawbacks.

In general, the non-volatile fraction obtained as a result of the solid-liquid separation processes carried out in the known vacuum evaporator systems retains an excessive proportion of liquid (generally between 70% and 30% of liquid) due to poor design of the available technologies and/or inefficient heat transfer, among many other causes.

This means that in many cases the non-volatile fraction obtained is not suitable for sale or reuse, which means that the concentrated fraction obtained is of no value to the same or another industry.

Only if the non-volatile fraction contains a very small amount of water, preferably less than 10%, can it be considered for reuse in the same or other industries.

Therefore, the known types of solid-liquid separation technologies are not able to obtain a useful non-volatile fraction with less than 10% of liquid, preferably less than 5% of liquid.

Another drawback of current vacuum evaporation systems is the quality of the water recovered from the condensation, which often contains dragged non-volatiles due to poor boiling chamber design and the need to use higher temperatures for evaporation. This condensed water often might need further chemical or biological treatment before it can be reused or even discharged into the sewage network.

Another drawback is that the known types of solid-liquid separation vacuum evaporator systems and devices cannot be used for a wide range of products, especially water-based products, by-products and waste. This means that depending on the type of water-based product, by-product or waste to be separated, a specific separation vacuum evaporator system and device must be selected.

In this regard, in the field of vacuum evaporation systems which are intended to separate products, in particular water-based products, by-products and waste, into at least two fractions, a non-volatile fraction and a volatile fraction, there is a need for a vacuum evaporation device and a vacuum evaporation system (i) capable of obtaining a volatile fraction containing between 95% and 99.9% of liquid (in most of the cases the liquid is water) and thus a non-volatile fraction containing a very reduced percentage of between 5% and 0.1% of liquid, in most cases the liquid is water; (ii) capable of evaporating and condensing water in a similar way so that the final quality of the water is equal to or higher than that of distilled water; (iii) wherein the vacuum evaporation device is suitable for use with all different types of products to be separated, in particular water-based products, by-products and waste; and (iv) wherein the vacuum evaporation device is capable of evaporating the water under low temperature and low impact conditions such that the properties of the organic products, by-products and waste maintain are not affected by the process.

### DESCRIPTION OF THE INVENTION

The present invention provides a solution to the aforementioned issues by providing a vacuum evaporation device for separating products, such as water-based products, by-products and waste, according to independent claim 1, a system comprising at least one vacuum evaporation device according to claim 14. In dependent claims, preferred embodiments of the invention are defined.

*In a first inventive aspect, the present invention provides a vacuum evaporation device for separating products, such as water-based products, by-products and waste, into a non-volatile fraction and* a *volatile fraction, the vacuum evaporation device comprising:*
- *a tubular member having,*
   - *a length L2, an outer diameter D2ₒᵤₜ and an inner diameter D2ᵢₙ, wherein L2 is equal to or greater than 8 times D2ᵢₙ,*
   - *an outer surface and an inner surface opposite the outer surface,*
   - *first and second closed ends, such that a substantially airtight chamber is formed in the interior of the tubular member,*
   *the tubular member further comprising:*
   - *an inlet for the entry of the product to be treated,*
   - *a first outlet for the discharge of the non-volatile fraction, and*
   - *a second outlet for the exit of the volatile fraction and optionally also for coupling a vacuum pump;*
- *heating means for heating at least a part of the outer surface of the tubular member; and*
- *a stirrer disposed along at least a part of the interior of the tubular member, the stirrer being adapted to rotate.*

The vacuum evaporation device of the present invention is adapted to separate products, such as water-based products, by-products and waste, into at least two different output fractions, a non-volatile fraction and a volatile fraction.

The vacuum evaporation device of the present invention comprises a tubular member. The tubular member has a length L2, an outer diameter D2ₒᵤₜ and an inner diameter D2ᵢₙ, wherein L2 is equal or more than 8 times D2ᵢₙ, and the tubular member has an outer surface and an inner surface opposite the outer surface. The tubular member has first and second closed ends, such that a substantially airtight chamber is formed in the interior of the tubular member. The tubular member further comprises an inlet for the entry of the product to be treated, a first outlet for the discharge of the non-volatile fraction, and a second outlet for the exit of the volatile fraction, the second outlet optionally also being adapted for coupling a vacuum pump.

The vacuum evaporation device of the present invention further comprises heating means for heating at least a part of the outer surface of the tubular member.

During operation, the tubular member of the vacuum evaporation device is arranged horizontally. In a preferred mode of operation, in a first stage of the evaporation process, the interior of the tubular member is placed under the desired vacuum pressure depending on the product to be treated and then the product to be separated is introduced into the interior of the tubular member. Preferably, the product to be treated enters the interior of the tubular member gradually and at a low rate. The condition of the product (mainly, the humidity level of the product) already inside the tubular member determines the rate at which the dosage of more new product is introduced. During operation, the tubular member of the vacuum evaporation device is adapted to receive the product to be separated entering through the inlet and to contain therein a quantity of the product for a period of time during which evaporation of the volatile fraction of the product takes place. The non-volatile fraction and the volatile fraction obtained after the evaporation has taken place inside the vacuum evaporation device, leave the interior of the tubular member of the of the vacuum evaporation device through the first and second outlets respectively.

During operation, the heating means heat at least a part of the outer surface of the tubular member, so that the heat from the heating means is transferred to the product contained in the interior of the tubular member by means of conduction through the wall of the tubular member. Preferably, the heating means are adapted to heat a cylindrical region of the outer surface of the tubular member. As the heating means cover an entire cylindrical area of the outer surface of the tubular member, the heat is uniformly distributed around a given cylindrical area of the tubular member so that the heat from the heating means is uniformly transferred to the product contained in the interior of the tubular member.

The vacuum evaporation device of the present invention further comprises a stirrer disposed along at least a part of the interior of the tubular member, the stirrer being adapted to rotate so as to move the product to be treated. The stirrer extends along, i.e. in the longitudinal direction of, the tubular member and rotates around its own longitudinal axis. The rotation of the stirrer at a given speed causes the product to be treated, which enters the inside of the tubular member at the inlet, to spread out and at the same time advance along the inside of the tubular member towards the opposite end of the tubular member.

Preferably, the respective first and second closed ends of the tubular member comprise respective closure elements, each closure element being configured for and arranged at a respective end of the tubular member to completely and airtightly close the respective ends of the tubular member, thereby forming the substantially airtight chamber.

The vacuum evaporation device according to the first inventive aspect of the present invention can advantageously separate a product to be treated, preferably an aqueous organic and inorganic compound, which enters the vacuum evaporation device, into a non-volatile fraction and a volatile fraction, with the particularity that the obtained volatile fraction can reach a content equal to or greater than 90% of liquid, preferably equal to or greater than 95% of liquid, more preferably equal to or greater than 99% of liquid, and even more preferably greater than 99.9% of liquid; and, therefore, the non-volatile fraction contains equal to or less than 10% of liquid, preferably equal to or less than 5% of liquid, more preferably equal to or less than 1% of liquid, and even more preferably equal to or less than 0.1% of liquid. This makes the present vacuum evaporation device a very efficient device in terms of the purity of the separated fractions obtained after the evaporation process.

In most applications of the vacuum evaporation device according to the first inventive aspect of the present invention, the liquid to be evaporated from the product to be treated is water. When the liquid to be evaporated from the product to be treated is water, the vacuum evaporation device produces a high quality volatile fraction of >90%, preferably >95%, more preferably >99%, and even more preferably >99.9% of water, which, after subsequent condensation, produces a high quality water. On the other hand, the vacuum evaporation device produces a high quality non-volatile fraction containing <5%, preferably <1%, and even more preferably <0.1 % of water.

During operation, the vacuum evaporation device operates under vacuum. As mentioned above, the product to be treated preferably enters the interior of the tubular member gradually and at a low rate. Therefore, the vacuum evaporation device operates continuously, unlike traditional vacuum evaporation devices consisting of vessels that operate in batches. This makes the present vacuum evaporation device a very efficient device in the sense that it can produce the separated fractions in the vacuum process at shorter rates than other types of conventional evaporation devices. On the other hand, the vacuum conditions make it possible to obtain at least two fractions after the evaporation process, the non-volatile fraction and the volatile fraction, both free from viruses and bacteria. Therefore, if the liquid contained in the product to be treated inside the vacuum evaporation device is water, the water recovered after condensation of the volatile fraction is of very high quality, close to or even better than distilled water.

On the other hand, the vacuum evaporation device according to the first inventive aspect of the present invention is advantageously suitable for separating different types of products to be treated, such as food products (e.g. juice or milk), blood, industrial sludges or industrial water and wastewater non-liquid fractions. Some examples of applications of the present invention are given below:
- Non-volatile fraction of juice: Conventional vacuum evaporators used to concentrate juices evaporate up to 70% of the water. On the contrary, the vacuum evaporation device of the present invention can advantageously obtain a juice non-volatile fraction of up to 95%.
- Industrial sludge: Conventional vacuum evaporators do not work on sludge. That is why methods such as press filters are used, but the final humidity of the non-volatile fraction rarely falls below 50%. On the contrary, the vacuum evaporation device of the present invention can advantageously obtain a sludge non-volatile fraction of up to 95%. The recovered non-volatile fraction, which is 95% free of water, can be reused for example for cement production. According to the present invention, in other similar scenarios of many other sludges, minerals or metals can be recovered or reused in other industries thanks to the 0.1% moisture level.
- Products/by-products/organic waste: Nowadays they are usually transported as waste by a waste manager and they are treated in drying trommels mainly to end up as compost. The drying trommel does not recover the water. On the contrary, the vacuum evaporation device of the present invention can advantageously obtain a non-volatile fraction of the products/by-products/organic waste of up to 95%. Some examples of food products to be treated to recover their non-volatile fraction are: orange peels, milk and oat production residues and alperujo (olive oil production). Due to the fact that the vacuum evaporation device of the present invention can advantageously obtain a non-volatile fraction of the food product of up to 95% and that the process is carried out at low temperature, it allows the recovery of the non-volatile fraction of orange peels, milk and oat production residues or alperujo (olive oil production) as elements of value.
- Industrial water and wastewater non-liquid fractions: Conventional vacuum evaporators are generally able to non-volatile fraction wastewater with a humidity of 97% down to 20% and very rarely as low as 5% or less. For as long as the non-volatile fraction maintains a significant level of water, such as 20%, it makes the revaluation of said fraction impossible since the water acts as a glue. According to the present invention, there is no wastewater concentrate, but pure water at one hand and on the other hand a non-volatile fraction like sand on the beach. According to the present invention, the evaporator does not produce a wastewater concentrate but, on the one hand, practically pure water and, on the other hand, a non-volatile fraction with a consistency similar to beach sand.

The following terminology is used along the whole document to describe features of the invention.

In the context of the present invention, the term "tubular member" should be understood as a member which is essentially tubular. This means that the tube may have one or more portions, either of the inner or outer surface of the tube, which are not strictly circular in cross-section. Similarly, this means that the tube may have one or more portions which are not entirely straight but are substantially straight.

In the context of the present invention, any of the terms "product", "product to be treated" or "product to be separated" should be understood as a broad term that can include a wide range of different products, in particular water-based products, by-products and waste. Some examples of said products that can be separated by the vacuum evaporation device according to the first inventive aspect of the present invention are seawater, industrial wastewater, industrial sludges and concentrates (a form of wastewater with a lower water percentage), animal manure (such as chicken, cow and pig excrement), bio-waste from food and beverage production (vegetable milk okara, fruit and vegetable peels, blood, animal remains...) as well as many other water-based examples.

In the context of the present invention, the term "non-volatile fraction" should be understood as the fraction of the product obtained after the evaporation process has been carried out inside the vacuum evaporation device and which contains the fraction of the product that has not evaporated during the evaporation process. This non-volatile fraction, also known as the non-liquid fraction, typically contains between 0.1% and 30% of liquid. The term "volatile fraction" should be understood as the fraction of the product to be treated obtained after the evaporation process has been carried out inside the vacuum evaporation device and which contains the fraction of the product that has evaporated during the evaporation process. This volatile fraction, also known as the distillate fraction, typically contains between 70% and 99.9% of liquid.

In an embodiment, the tubular member extends in a completely straight longitudinal direction.

In an embodiment, the length L2 of the tubular member is equal to or greater than 15 times D2ᵢₙ. In another embodiment, the length L2 of the tubular member is equal to or greater than 20 times D2ᵢₙ. In a preferred embodiment, the length L2 of the tubular member is from 20 to 30 times D2ᵢₙ.

*In a preferred embodiment, the heating means of the vacuum evaporation device comprises:*
- *an additional tubular member having,*
   - *an inner diameter D3ᵢₙ, an outer surface and an inner surface opposite the outer surface, wherein the inner diameter D3ᵢₙ is greater than the outer diameter D2ₒᵤₜ,*

   *the additional tubular member*
      *being arranged coaxially over at least a part of the tubular member and comprising first and second closed ends having respective inner surfaces, such that a passageway is formed in the space between the at least a covered part of the outer surface of the tubular member, the inner surface of the additional tubular member and the respective inner surfaces of the first and second closed ends of the additional tubular member,*
   *the additional tubular member further comprising:*
      - *an inlet for the entry of a heating fluid, and*
      - *an outlet for the exit of the heating fluid,*
      *wherein the passageway is adapted for the circulation of the heating fluid along the passageway from the inlet to the outlet of the heating fluid; and*
   *wherein the tubular member comprises at least one set of fins protruding from and extending outwards from an area of the outer surface of the tubular member being covered by the additional tubular member, the at least one set of fins being adapted to direct the flow of the heating fluid inside the passageway.*

In other alternative embodiments, the heating means of the vacuum evaporation device may comprise a sheathed heating element disposed in contact with at least part of the outer cylindrical surface of the tubular member, the sheath being formed from a material which is electrically heatable.

The vacuum evaporation device of the present invention according to the preferred embodiment comprises two tubular members, namely a tubular member and an additional tubular member. The two tubular members extend along the same longitudinal direction.

The additional tubular member has inner diameter D3ᵢₙ and has an outer surface and an inner surface opposite the outer surface. The inner diameter D3ᵢₙ is greater than the outer diameter D2ₒᵤₜ, and the additional tubular member is arranged coaxially over at least a part of the tubular member. The additional tubular member comprises first and second closed ends when the additional tubular member is arranged coaxially over the tubular member, such that a passageway is formed in the space between the at least a covered part of the outer surface of the tubular member, the inner surface of the additional tubular member and the respective inner surfaces of the first and second closed ends of the additional tubular member. The additional tubular member further comprises an inlet for the entry of a heating fluid and an outlet for the exit of the heating fluid. Thus, the passageway is adapted for the circulation of the heating fluid along the entire passageway, from the inlet to the outlet of the heating fluid.

According to this preferred embodiment, the tubular member of the vacuum evaporation device comprises at least one set of fins protruding from and extending outwards from an area of the outer surface of the tubular member being covered by the additional tubular member. In the mode of operation of the vacuum evaporation device, the at least one set of fins is adapted to interfere with the heating fluid flow and to direct the flow in the desired directions inside the passageway. Directing the heating fluid flow within the passageway by the at least one set of fins ensures that heating fluid entering the passageway from an inlet is evenly distributed to all parts of the passageway. It therefore helps to distribute the heat from the heating fluid evenly over the entire covered outer surface area of the tubular member, thus maintaining a uniform heat transfer over the entire covered outer surface of the tubular member. It is critical to the evaporation process that the heat transfer is evenly transferred over the entire covered outer surface of the tubular member in order to maximise the heat transfer to the product to be treated, thereby resulting in a reduction of the speed of the evaporation cycle and also improving the purity of the resulting fractions.

In an embodiment of the preferred embodiment, both the tubular member and the additional tubular member extend in a completely straight longitudinal direction.

Preferably, the respective first and second closed ends of the additional tubular member comprise respective closure members, each closure element being arranged at a respective end of the additional tubular member to completely close the free space present at the two respective ends of the additional tubular member, thus forming the passageway for the circulation of the heating fluid.

*In an embodiment, either the tubular member, the additional tubular member according to the preferred embodiment, or both, are made of a thermally conductive material, preferably a metal, and more preferably stainless steel.* Advantageously, the use of a metal tubular member provides a device which is overall more robust than a device whose outer tube is made of a different type of material, while at the same time satisfactorily conducting heat from the outer surface to the inner surface of the covered area of the tubular member. In particular, the stainless steel is a preferred metal for either the tubular member, the additional tubular member according to the preferred embodiment, or both. Stainless steel has the advantage of satisfactorily conducting heat from the outer surface to the inner surface of the covered area of the tubular member while being able to withstand vacuum pressures. Preferred stainless steels are: martensitic steels, ferritic steels, austenitic steels, duplex and precipitation hardening steels. However, equivalent metals other than stainless steel may be used.

*In an embodiment, the inlet for the entry of the product to be treated is disposed at a first region of the tubular member close to the first closed end, the first outlet for the discharge of the non-volatile fraction is disposed at a second region of the tubular member close to the second closed end, and the second outlet for the exit of the volatile fraction is disposed at a third region of the tubular member spaced apart from the first lateral part and the second lateral part.* The vacuum evaporation device is configured so that the inlet for the entry of the product is disposed at one end of the tubular member, while the first outlet for the discharge of the non-volatile fraction is disposed at the opposite end of the tubular member. The product to be treated must therefore be moved along the inside of the tubular element by the rotation of the stirrer until the non-volatile fraction produced by the evaporation process leaves the inside of the tubular element through the first outlet located at the opposite end.

In the mode of operating of the vacuum evaporation device according to the first inventive aspect of the invention, the vacuum evaporation device is disposed in a horizontal position. In this operating position, the first lateral part of a region of the tubular member close to the first closed end preferably corresponds to an upper lateral side part of the tubular member. This preferred position of the inlet for the product to be treated, at the top of the installed tubular member, favours the entry of the product to be treated, assisted by gravity. The second lateral part of a region of the tubular member close to the second closed end preferably corresponds to a lower lateral side part of the tubular member. This preferred position of the first outlet for non-volatile fraction discharge, at the bottom of the installed tubular member, favours the downward flow of non-volatile fraction, assisted by gravity. The third lateral part of a region of the tubular member spaced apart from the first and the second lateral parts preferably corresponds to an upper lateral side part of a central region of the tubular member. This preferred position of the second volatile outlet, at the top of the installed tubular member, favours the upward flow of the volatile fraction.

*In some embodiments, the inlet of the tubular member comprises a first connection means adapted for establishing a fluidic communication with the interior of the tubular member for the entry of the product to be treated; the first outlet of the tubular member comprises a second connection means adapted for establishing a fluidic communication with the interior of the tubular member for the discharge of the non-volatile fraction; and the second outlet of the tubular member comprises a third connection means adapted for establishing a fluidic communication with the interior of the tubular member for the exit of the volatile fraction and optionally also for the connection of a vacuum pump adapted to generate a vacuum inside the substantially airtight chamber.*

In a particular embodiment, the first connection means for establishing a fluidic communication with the interior of the tubular member for the entry of the product to be treated are located on the outside of the tubular member.

In a particular embodiment, the second connection means for establishing a fluidic communication with the interior of the tubular member for the discharge of the non-volatile fraction are located on the outside of the tubular member.

*In a particular embodiment, the tubular member further comprises a third outlet for coupling a vacuum pump to generate a vacuum inside the substantially airtight chamber.*

*Preferably, when the tubular member further comprises a third outlet for coupling a vacuum pump to generate a vacuum inside the substantially airtight chamber, the third outlet comprises a fourth connection means adapted to establish a fluidic communication with the interior of the tubular member for coupling the vacuum pump.*

In this particular embodiment having a separate third outlet for coupling the vacuum pump to create a vacuum inside the substantially airtight chamber, allows other volatiles that evaporate at temperatures lower than the temperature of water to be carried in this fluidic communication, to be advantageously able to be collected or filtered, for example, for their re-use. In other cases, the volatiles which evaporate at a temperatures lower than that of water temperature are evacuated through the third connection means adapted to establish a fluidic communication with the interior of the tubular member for the exit of the volatile fraction. A volatile collector or filter may be connected to the third fluidic communication. This volatile collector or filter is configured according to the volatiles to be collected. The volatiles may be, for example, volatile organic compounds (VOCs) in an aqueous product which evaporate below the temperature of water at atmospheric pressure once inside the chamber of the tubular member. If the vacuum evaporation device does not have a third volatile outlet, the VOCs may escape through the volatile fraction outlet but will not condense like water. Therefore, a third volatile outlet is provided in order to also separate the volatiles generated during the evaporation process.

*With respect to the stirrer, in some embodiments, it occupies substantially the entire length of the tubular member, from the first end to the second end of the tubular member, so as to move the product to be treated in the entirety of the inside of the tubular member.*

*In an embodiment, the stirrer extends in the longitudinal direction of the tubular member with a helical configuration, the peripheral end parts of the stirrer contacting the inner surface of the tubular member; preferably, the stirrer with a helical configuration being a helical element further comprising a plurality of fibres, the helical element preferably being made of metal and more preferably of stainless steel.* This particularly advantageous configuration, in which the peripheral end parts of the stirrer contact the inner surface of the tubular member, serves to scrape off any non-volatile fraction that is deposited on an inner surface of the tubular member during the evaporation process. At the same time, this particularly advantageous helical configuration allows the rotation of this stirrer to move the product slowly from one end of the tubular member to the opposite end during the evacuation process, according to its configuration as an endless element.

Preferably, the helical element comprises a peripheral portion made of fibres, being fixedly disposed on the central helical element and extending outwardly, for example radially, from the central helical element. This particularly advantageous configuration, in which the fibre ends of the stirrer contact the inner surface of the tubular member, serves to better scrape off any non-volatile fraction that is deposited on an inner surface of the tubular member during the evaporation process. The helical element is preferably made of metal and more preferably of stainless steel, while the peripheral portion made of fibres is preferably made of wire, polymer or hairless fibres.

*With respect to the preferred embodiment where the heating means comprises an additional tubular member and a passageway for a heating fluid circulating in between the external part of the tubular member and the internal part of the additional tubular member, in a particular embodiment, the tubular member has a length L2 and the additional tubular member has a length L3, wherein L3 is between 0.6 and 1 times L2.* In this particular embodiment, the thermal exchange area with the heating fluid of the tubular member corresponding to the covered part of the outer surface of the tubular member of 0.6 to 1 times L2 is sufficiently large to achieve a high efficiency of the vacuum evaporation device in terms of purity of the resulting non-volatile fraction and volatile fraction. Below a value of 0.6 times L2, the vacuum evaporation device is not sufficiently heated, at least not with this source of heat alone.

In an embodiment of the preferred embodiment, wherein when L3 is less than L2, the additional tubular member is arranged over a central part of the tubular member such that two respective end regions of the tubular member are not covered by the additional tubular member. In this embodiment, the inlet for the product to be treated and the first outlet for the non-volatile fraction are located in each of these end regions of the tubular member not covered by the additional tubular member.

In other embodiments of the preferred embodiment, wherein when L3 is less than L2, the additional tubular member is arranged over a part of the tubular member and only an end regions of the tubular member is not covered by the additional tubular member.

In an embodiment of the preferred embodiment, the tubular member comprises at least detachable portions connected together. For example, the tubular member may comprise three detachable portions comprising a central portion and two end portions, each of the two end portions being connected to a respective end of the central portion.

*In an embodiment of the preferred embodiment, the tubular member comprises two or more sets of fins protruding from its outer surface and extending outwards, the total number of set of sets preferably being from 4 to 12, each set of fins being arranged in a respective circumferential region spaced apart from an adjacent circumferential region in which an adjacent set of fins is disposed.*

*Preferably, the at least one set of fins of the tubular member comprises a plurality of fins being distributed at spaced positions of a respective circumferential region of the outer surface of the tubular member, the number of fins of the plurality of fins preferably being from 8 to* 24. Preferably, the positions of each fin around a respective circumferential region of the outer surface of the tubular member are evenly spaced, i.e. there is the same distance between two adjacent fins.

*Preferably, the at least one set of fins of the tubular member comprises a plurality of straight fins extending from a respective region of the outer surface along the outer surface of the tubular member in respective directions inclined with respect to the longitudinal direction, the angle of inclination of the straight fins with respect to the longitudinal direction preferably being from 15 to 30° and the length of the straight fins (2.6) preferably being from 10 to 40 cm.*

*In a second inventive aspect, the present invention provides a system for the separation of products, such as water-based products, by-products and waste, into a non-volatile fraction and a volatile fraction, the system comprising:*
- *a vacuum evaporation device according to any of the described embodiments,*
- *a vacuum pump coupled to the tubular member by a connection means, the vacuum pump being adapted to generate a vacuum inside the interior of the tubular member,*
- *pressure measuring means for measuring the pressure of the substantially airtight chamber,*
- *moisture content measuring means for measuring the moisture content of the non-volatile fraction in the interior of the tubular member,*
- *means for regulating the flow of the product to be treated entering the inlet of the tubular member,*
- *means for regulating the flow of the non-volatile fraction coming out from the first outlet of the tubular member,*
- *a motor connected to the stirrer for rotating the stirrer at a rotational speed, and*
- *control means adapted to receive at least the values of: the rotational speed of the stirrer, the pressure of the substantially airtight chamber and the moisture content of the non-volatile fraction in the interior of the tubular member, and to command the system, on the basis of these actuations:*
   - *the actuation of the vacuum pump to generate a specific vacuum in the interior of the tubular member,*
   - *the actuation of the means for regulating the flow of the product to be treated entering the inlet of the tubular member,*
   - *the actuation of the means for regulating the flow of the non-volatile fraction coming out from the first outlet of the tubular member, and*
   - *the actuation of the motor to vary the rotational speed of the stirrer and*/*or to vary the direction of the rotation of the stirrer depending on the type of the product to be treated and*/*or the pressure of the substantially airtight chamber and the moisture content of the non-volatile fraction in the interior of the tubular member.*

Preferably, the vacuum pump is coupled to the tubular member by the third, the fourth or both connection means of the vacuum evaporation device according to the first inventive aspect of the invention.

*In a preferred embodiment of the system according to the second inventive aspect, when the vacuum evaporation device is according to the described preferred embodiment of the first inventive aspect wherein the heating means for heating the outer surface of the tubular member comprises an additional tubular member, the system further comprises:*
- *a tank, which, in the operating mode, comprises a heating fluid at a predetermined temperature, wherein the vacuum evaporation device is connected to the tank by means of a first fluidic communication and a second fluidic communication, wherein:*
   - *the first fluidic communication connects the tank and the inlet of the additional tubular member for carrying the heating fluid from the tank to the passageway, with the interposition of a pumping element for the supply of heating fluid and means for regulating the flow of the heating fluid in the first fluidic communication, and*
   - *the second fluidic connects the tank and the outlet of the additional tubular member for carrying the heating fluid from the passageway to the tank,*
- *heating means for heating the heating fluid, and*
- *temperature measuring means of the heating fluid disposed at least at one point of the system;*
   *wherein the control means is further adapted to receive the temperature of the heating fluid at least at one point of the system, and to command, on the basis* of *these actuations:*
   - *the actuation of the means for regulating the flow of the heating fluid in the first fluidic communication for the entry of heating fluid in the interior of the tubular member of the vacuum evaporation device, and*
   - *the actuation of the heating means for regulating the temperature of the heating fluid of the tank, when the temperature of the heating fluid measured by the temperature measuring means is close or outside a predetermined temperature range of the heating fluid.*

In an embodiment, the means for regulating the flow of the heating fluid in the first fluidic communication comprise a recirculation pump.

The heating fluid is at a higher temperature than the product to be treated. Therefore, once the heating fluid has passed through the passageway of the vacuum evaporation device, its temperature will be reduced due to the indirect heat transfer with the product through the wall of the tubular member. Thus, the control means will command to increase the heating means to increase the temperature of the heating fluid contained in the tank for the heating fluid, when the temperature of the heating fluid measured by the temperature measuring means is close to or less than a minimum temperature threshold of a predetermined temperature range of the heating fluid.

In an embodiment, the control means comprises a PLC.

In an embodiment, the heating means to heat the heating fluid comprises a boiler connected to the tank for heating the heating fluid contained in the interior of the tank.

In an embodiment, the system, further comprises a condenser connected by means of the third connection means to the second outlet for the exit of the volatile fraction from the vacuum evaporation device, the condenser being adapted to condense the volatile fraction in order to obtain a condensate.

In an embodiment, the system, further comprises one or more pressure measuring means connected to the interior of the tubular member for measuring at least the pressure of the product to be treated at least at one point of the interior of the tubular member.

In an embodiment, the system further comprises a vacuum sensor disposed inside the tubular member of the vacuum evaporation device, the vacuum sensor being adapted to measure the vacuum pressure inside the tubular member of the vacuum evaporation device.

In an embodiment, the system, further comprises two sensors connected to the stirrer, a first stirrer direction sensor adapted measure the direction of the rotation of the stirrer, and a second stirrer rotational speed sensor adapted to measure the rotational speed of the stirrer. Depending on the product to be treated, a different rotational speed of the stirrer needs to be programmed. On the other hand, depending on the moisture content value measured by the moisture content measuring means, the control means will change the direction of rotation of the stirrer. In particular, if the moisture content value of the non-volatile fraction inside the tubular member measured by the moisture content measuring means does not reach a predetermined threshold, then the control means will modify the direction of rotation of the stirrer in order to rotate the agitator again in order to move the product inside the evaporator in the opposite direction, i.e. from the first outlet to the inlet for the entry of the product, thus increasing the evaporation time of the product inside the evaporator in order to obtain the desired moisture of the non-volatile fraction at the first outlet.

In an embodiment, three temperature sensors are arranged to measure the heating fluid when passing through the vacuum evaporation device, one being arranged at the inlet of the heating fluid into the passageway, a second being arranged at the outlet of the heating fluid from the passageway, and a third being arranged at an intermediate position inside the passageway.

In an embodiment, the system further comprises one or more flowmeters, for example magneto-inductive flowmeters, disposed for example one at the inlet and another at the outlet of the heating fluid of the passageway, the respective flowmeters being adapted for measuring the flow rate and velocity of the heating fluid at the inlet and outlet of the passageway.

Other sensors can also be arranged in the system, such as: a sensor for measuring the moisture level of the product entering the device; a sensor for measuring the initial viscosity level of the product; a sensor for measuring the weight of the incoming product through the inlet and/or outlet pneumatic pump; a sensor for measuring the purity level of the recovered water (after condensation); a sensor for measuring the electrical power consumed; and/or a sensor for measuring the maximum power required.

*In an embodiment, the system, further comprises one or more additional vacuum evaporation devices, wherein two adjacent vacuum evaporation devices are connected in series or in parallel.*

All features described in this specification, including the claims, description and drawings, can be combined in any way except for combinations of mutually exclusive features.

### DESCRIPTION OF THE DRAWINGS

These and other features and advantages of the invention will be seen more clearly from the following detailed description of preferred embodiments provided only by way of illustrative and non-limiting examples in reference to the attached drawings.
Figure 1 shows a perspective view of a vacuum evaporation device according to an embodiment of the present invention.
Figure 2 shows a side view of a vacuum evaporation device according to the embodiment of Figure 1.
Figure 3 shows a top view of a vacuum evaporation device according to the embodiment of Figure 1.
Figure 4 shows a longitudinal sectional view of a vacuum evaporation device according to the embodiment of Figure 1.
Figure 5 shows a front view of a vacuum evaporation device according to the embodiment of Figure 1.
Figure 6 shows a rear view of a vacuum evaporation device according to the embodiment of Figure 1.
Figure 7 shows a cross-sectional view from plane A-A of a vacuum evaporation device according to the embodiment of Figure 1.
Figure 8 shows a perspective view of the central portion of the tubular member of a vacuum evaporation device according to an embodiment of the present invention.
Figure 9 shows a side view of the central portion of the tubular member according to the embodiment of Figure 8.
Figure 10 shows a top view of the central portion of the tubular member according to the embodiment of Figure 8.
Figure 11 shows a cross-sectional view of the central portion of the tubular member from plane B-B of Figure 9.
Figure 12 shows a perspective view of the additional tubular member of a vacuum evaporation device according to an embodiment of the present invention.
Figure 13 shows an opposite side view of the additional tubular member according to the embodiment of Figure 12.
Figure 14 shows a top view of the additional tubular member according to the embodiment of Figure 12.
Figure 15 shows a perspective view of the stirrer of a vacuum evaporation device according to an embodiment of the present invention.
Figure 16 shows a side view of the stirrer of a vacuum evaporation device according to an embodiment of the present invention.
Figure 17 shows a front view of the stirrer of a vacuum evaporation device according to an embodiment of the present invention.
Figure 18 shows a cross-sectional view of the stirrer from plane C-C of Figure 16.
Figure 19 shows a schematic diagram of the system according to an embodiment of the present invention.

### DETAILED DESCRIPTION OF THE INVENTION

The present invention defines a vacuum evaporation device (1) for separating products, in particular water-based products, by-products and waste, into a non-volatile fraction and a volatile fraction.

The vacuum evaporation device (1) comprises a tubular member (2), heating means for heating at least a part of the outer surface (2.1) of the tubular member (2), and an stirrer (6) disposed along at least a part of the interior of the tubular member (2), the stirrer (6) being adapted to rotate so as to move the product to be treated. The tubular member (2) has a length L2, an outer diameter D2out and an inner diameter D2in, wherein L2 is equal to or greater than 8 times D2in. The tubular member (2) has an outer surface (2.1) and an inner surface (2.2) opposite the outer surface (2.1), and the tubular member (2) has first and second closed ends (2.7, 2.8) such that a substantially airtight chamber is formed in the interior of the tubular member (2). The tubular member (2) further comprises an inlet (2.3) for the entry of the product to be treated and at least two outlets, one outlet, namely the first outlet (2.4), for the discharge of the non-volatile fraction and another outlet, namely the second outlet (2.5), for the exit of the volatile fraction. The second outlet (2.5) for the exit of the volatile fraction can optionally be used for coupling a vacuum pump (12).

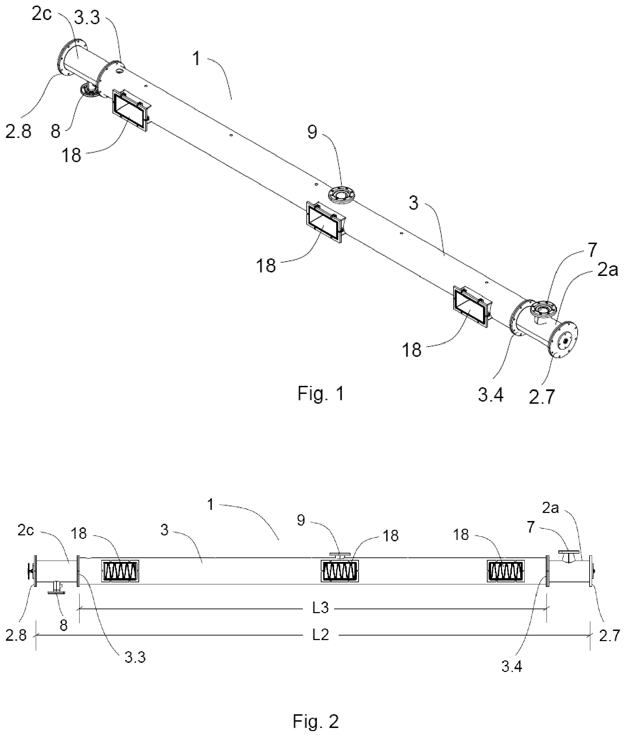

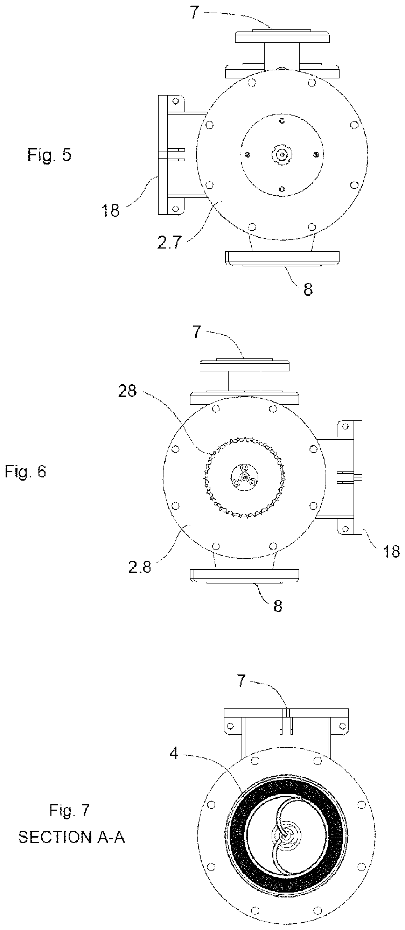

During operation, the tubular member (2) is disposed horizontally, as shown in Figures 1 to 7, and operates under vacuum. In a preferred mode of operation, the interior of the tubular member (2) is placed under vacuum and then the product to be treated is introduced into the interior of the tubular member (2) through the first connection means (7). Preferably, the product to be treated enters the interior of the tubular member (2) gradually and at a low rate through the first connection means (7).

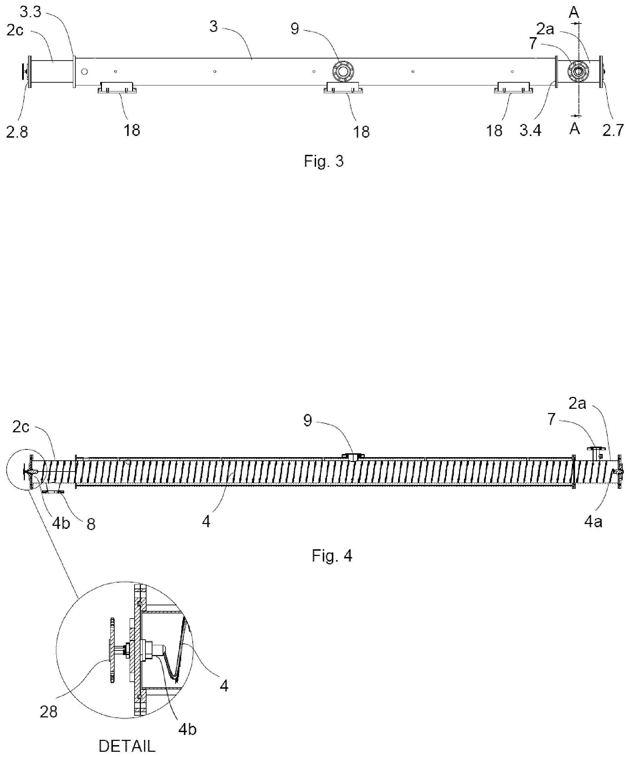

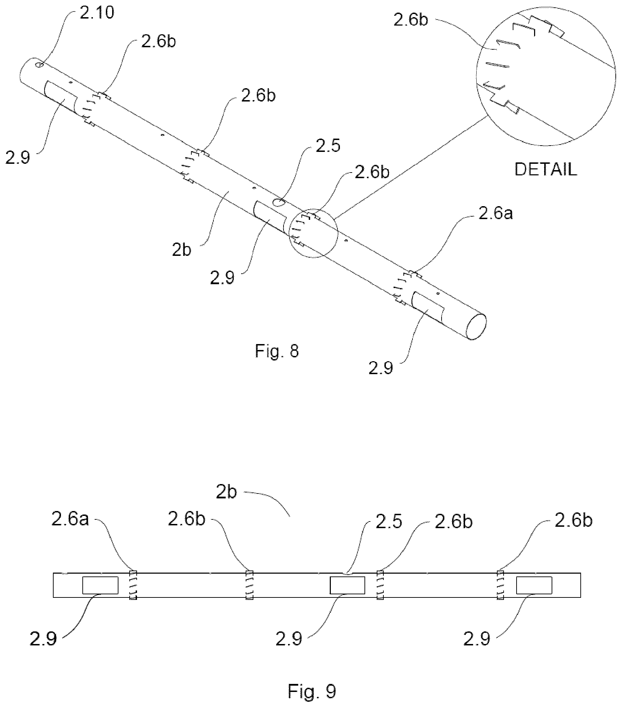

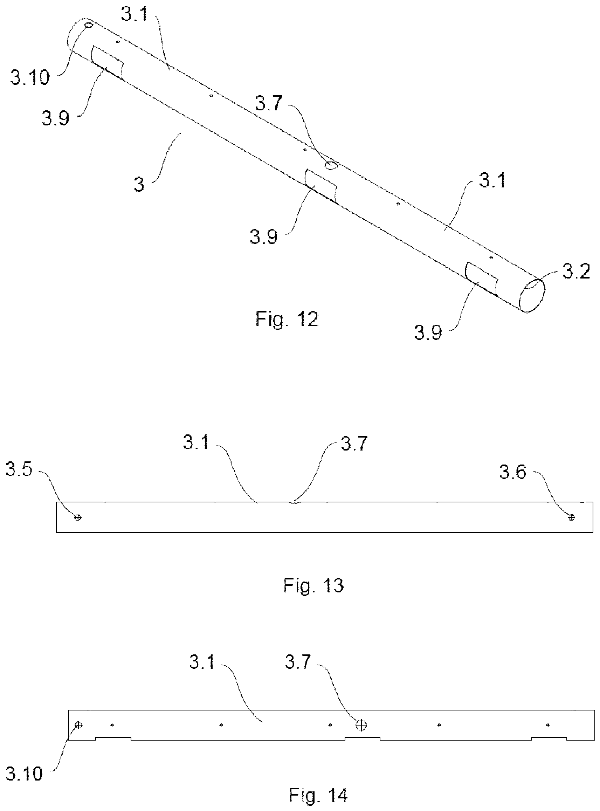

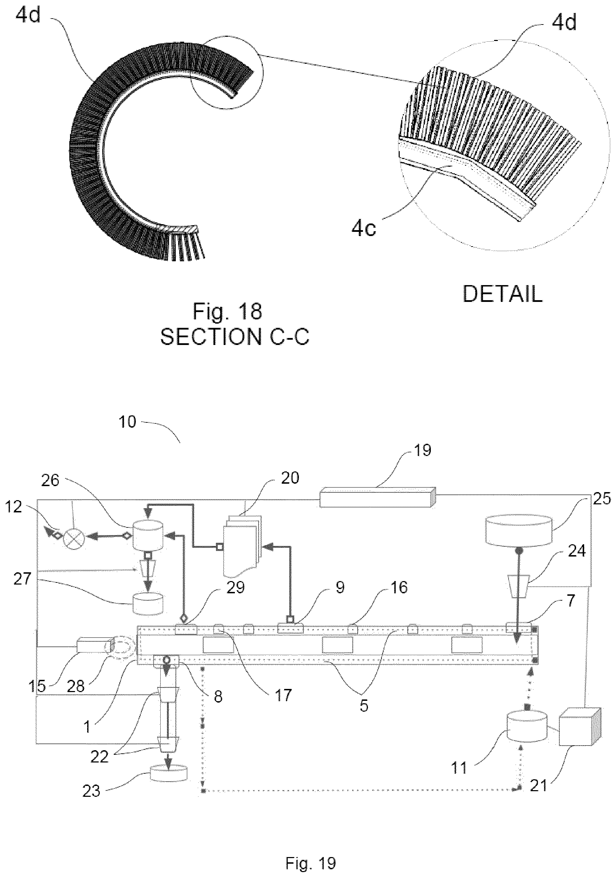

A preferred embodiment of the vacuum evaporation device (1) according to the first inventive step is shown in Figures 1 to 14. Figures 1 to 7 shows the mounted vacuum evaporation device (1) and Figure 8 to 11 shows the tubular member of the vacuum evaporation device (1). This preferred embodiment comprises a particular configuration of the heating means for heating at least a part of the outer surface (2.1) of the tubular member (2) of the vacuum evaporation device (1). In particular, the heating means comprises an additional tubular member (3). Figures 12 to 14 show various views of the additional tubular member of the vacuum evaporation device (1). The additional tubular member (3) has an inner diameter D3ᵢₙ, the additional tubular member (3) having an outer surface (3.1) and an inner surface (3.2) opposite the outer surface (3.1), wherein the inner diameter D3ᵢₙ being greater than the outer diameter D2ₒᵤₜ. The additional tubular member (3) is arranged coaxially over at least a part of the tubular member (2), see Figure 4. The additional tubular member (3) comprises first and second closed ends (3.3, 3.4) when the additional tubular member (3) is arranged coaxially, such that a passageway (5) is formed in the space between the at least a covered part of the outer surface (2.1) of the tubular member (2), the inner surface (3.2) of the additional tubular member (3) and the respective inner surfaces of the first (3.3) and second closed ends (3.4) of the additional tubular member (3). The additional tubular member (3) further comprises an inlet (3.5) for the entry of the heating fluid and an outlet (3.6) for the exit of the heating fluid, see Figure 13. The passageway (5) formed between the two tubular members (2, 3) is adapted for the circulation of the heating fluid along the passageway (5) from the inlet (3.5) to the outlet (3.6) of the heating fluid. The passageway (5) is not visible in Figures 1 to 14 due to its reduced height, but is shown schematically in Figure 19. The additional tubular member (3) further comprises an opening (3.7) arranged in a central position which, in the assembled position, coincides with the second outlet (2.5) for the exit of the vapour of the tubular member (2). Thus, in the assembled position, a third connection means (9) can be connected to the second outlet (2.5) for the exit of the vapour of the tubular member (2) through this opening (3.7) provided in the additional tubular member (3).

In the preferred embodiment of the vacuum evaporation device (1) according to the first inventive step is shown in Figures 1 to 14, the tubular member (2) comprises at least one set (2.6a) of fins protruding from and extending outwards from an area of the outer surface (2.1) of the tubular member (2) being covered by the additional tubular member (3), the at least one set (2.6a) of fins being adapted to direct the flow of the heating fluid inside the passageway (5). In the embodiment of Figures 1 to 14, four set (2.6a, 2.6b) of fins are arranged in a respective circumferential region spaced apart from an adjacent circumferential region in which an adjacent set (2.6a, 2.6b) of fins is disposed in the central portion (2b) of the tubular member (2), distributed along the longitudinal direction of the tubular member (2).

In the preferred embodiment of the vacuum evaporation device (1) according to the first inventive step is shown in Figures 1 to 14, the tubular member (2) has a length L2 and the additional tubular member (3) has a length L3, wherein L3 is between 0.6 and 1 times L2. In a first example of this preferred embodiment shown in Figures 1 to 14, the length L2 of the tubular member (2) is approximately 4000 mm and the inner diameter of the tubular member (2) is approximately 200 mm. Thus, in this first example, the length L2 is 20 times D2ᵢₙ. It is then accomplished that L2 is equal to or greater than 8 times D2ᵢₙ.

In this first example, the length L3 of the additional tubular member is approximately 4000 mm, the inner diameter D3ᵢₙ of the additional tubular member is approximately 250 mm and the wall thickness E3 is between 0.5 and 1 cm.

In a second example of this preferred embodiment shown in Figures 1 to 14, the length L2 of the tubular member (2) is approximately 6000 mm, the inner diameter of the tubular member (2) is approximately 200 mm and the wall thickness E2 is approximately 8 mm. Thus, in this second example, the length L2 is 30 times D2ᵢₙ. It is then accomplished that L2 is equal to or greater than 8 times D2ᵢₙ. In this second example, the dimensions of the additional tubular member are the same as the ones described in the first example.

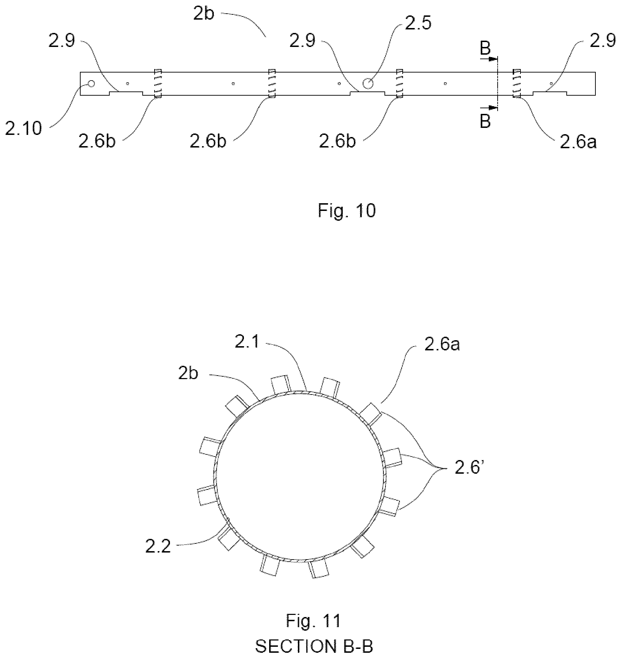

Furthermore, in this preferred embodiment of the vacuum evaporation device (1) shown in Figures 1 to 14, the tubular member (2) comprises at least one set (2.6a) of fins protruding from and extending outwards from an area of the outer surface (2.1) of the tubular member (2) being covered by the additional tubular member (3), the at least one set (2.6a) of fins being adapted to direct the flow of the heating fluid inside the passageway (5). The at least one set (2.6a) of fins can be seen in Figures 8 to 11. As it can be seen in Figure 11, in this preferred embodiment of the vacuum evaporation device (1), the at least one set (2.6a) of fins of the tubular member (2) comprises a plurality of fins (2.6'), in particular 12 fins, being distributed at evenly spaced positions of a respective circumferential region of the outer surface (2.1) of the tubular member (2). In this preferred embodiment, the at least one set (2.6a) of fins of the tubular member (2) comprises straight fins (2.6') extending from a respective region of the outer surface (2.1) along the outer surface of the tubular member (2) in respective directions inclined with respect to the longitudinal direction, the angle of inclination of the straight fins (2.6') with respect to the longitudinal direction preferably being from 15 to 30° and the length of the straight fins (2.6') preferably being from 10 to 40 cm.

Furthermore, in this preferred embodiment of the vacuum evaporation device (1) shown in Figures 1 to 14, the tubular member (2) comprises three external windows (18) to enable the interior of the tubular member (2) to be viewed by a user positioned outside the vacuum evaporation apparatus (1). These external windows (18) are optional. Both the tubular member (2) and the additional tubular member (3) have respective reduced portions (2.9, 3.9) for installation of each of the windows (18).

In the preferred embodiment of the vacuum evaporation device (1) shown in Figures 1 to 14, the tubular member (2) comprises three detachable portions (2a, 2b, 2c) connected together, a central portion (2b) and two opposite end portions (2a, 2b), one of which is located at one end of the central portion (2b), see Figure 1.

Figures 8 to 11 show respective views of a central portion (2b) of the tubular member (2) of a vacuum evaporation device (1) according to an embodiment of the present invention. Once the three detachable portions (2a, 2b, 2c) are assembled together, the two open ends of the mounted tubular member (2) are both closed by a closure elements (2.7, 2.8) to completely and airtightly close the respective ends of the tubular member, thereby forming the substantially airtight chamber, shown in Figure 1.

In an embodiment, either the tubular member (2), the additional tubular member (3), or both, are made of a thermally conductive material, preferably a metal, and more preferably steel.

In the preferred embodiment of the vacuum evaporation device (1) shown in Figures 1 to 14, the inlet (2.3) for the entry of the product to be treated is disposed at a first region of the tubular member (2) close to the first closed end (2.7), the first outlet (2.4) for the discharge of the non-volatile fraction is disposed at a second region of the tubular member (2) close to the second closed end (2.8), and the second outlet (2.5) for the exit of the volatile fraction is disposed at a third region of the tubular member (2) spaced apart from the first lateral part and the second lateral part.

In the preferred embodiment of the vacuum evaporation device (1) shown in Figures 1 to 14, the inlet (2.3) of the tubular member (2) comprises a first connection means (7) adapted for establishing a fluidic communication with the interior of the tubular member (2) for the entry of the product to be treated; the first outlet (2.4) of the tubular member (2) comprises a second connection means (8) adapted for establishing a fluidic communication with the interior of the tubular member (2) for the discharge of the non-volatile fraction; and the second outlet (2.5) of the tubular member comprises a third connection means (9) adapted for establishing a fluidic communication with the interior of the tubular member (2) for the exit of the volatile fraction and optionally also for the connection of a vacuum pump adapted to generate a vacuum inside the substantially airtight chamber.

In the preferred embodiment of the vacuum evaporation device (1) shown in Figures 1 to 14, the stirrer (6) occupies substantially the entire length of the tubular member (2), from the first end (2.3) to the second end (2.4) of the tubular member (2), see Figure 4, so as to agitate the product to be treated in the entirety of the tubular member (2).

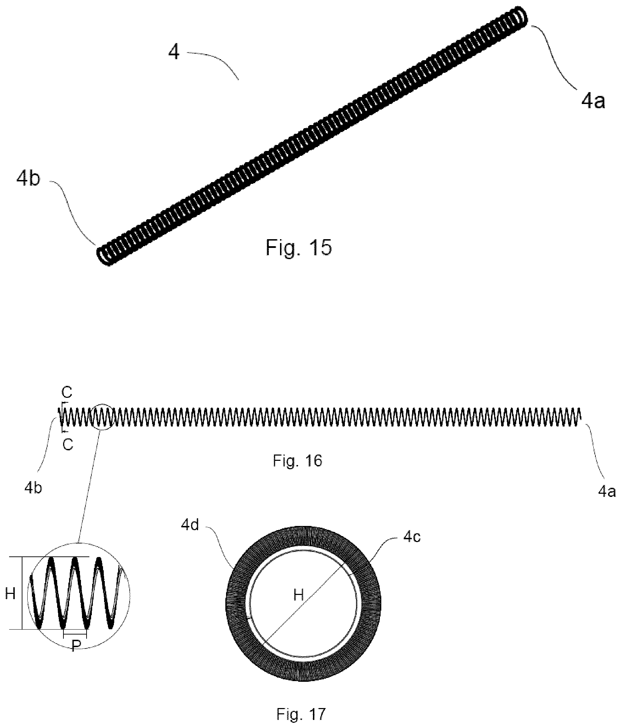

The stirrer (6) is shown separately in Figures 15 to 18. It can be seen from Figures 15 and 16 that the stirrer (6) extends in the longitudinal direction of the tubular member (2) with a helical configuration, wherein the peripheral end parts of the helical configuration of the stirrer (6) contact the inner surface (2.2) of the tubular member (2), see Figure 4. Figure 16 shows a detail in which the height (H) and the pitch (P) of the helical stirrer (6) are indicated. The total height (H) is preferably between 0.9 and 1.1 times the internal diameter of the tubular member (2) and the pitch (P) is preferably between 3 and 8 cm. The stirrer (6), having a helical configuration, is configured by a central helical element (4c) and a plurality of fibres (4d) extending outwardly from the central helical element (4c), see Figures 17 and 18. Figure 18 also includes a detail of a part of the stirrer (6), where the plurality of fibres (4d) can be observed. The central helical element (4c) is preferably made of metal and more preferably of stainless steel.

### EXAMPLES:

Three different examples of products that have been treated in a vacuum evaporator device and system according to the first and second inventive aspects of the invention are described in the following table:

| Product to be treated | Orange peels | Oat milk bio-waste | Jarosite sludge |
|---|---|---|---|
| Description | Product obtained from orange juice. Cut into 3 x 3 cm cubes, without enzymatic treatment or other treatment after juice extraction. | Directly from oat milk production. | Sourced from zync production. |
| Original quantity of the product to be treated | 1000 kg | 1000 kg | 1000 kg |
| Initial moisture content of the product to be treated | 60% | 85% | 37.1% |
| Final moisture of the non-volatile fraction of the initial product | 11 % | 5% | 0.1% |
| Water recovered from the initial product | 449 kg | 842 kg | 370 |
| Non-volatile fraction recovered with target moisture | 551 kg | 158 kg | 630 |
| ON THE PROCESS: | | | |
| Closed-loop process temperature and pressure | 80 degrees - 1.5 bar | 44 degrees - 1.5 bar | 80 degrees 1.5 bar |
| Stirrer (6) speed | The stirrer (6) rotates very slowly in the vacuum evaporation device, 1-5 turns per minute, and can turn in the opposite direction at any time if the moisture levels along the tube are not optimal. | | |
| Cycle time | 6-8 hours | 8-10 hours | 3-5 hours |
| Quality of recovered water | Recycled water is almost always within these ranges, which can be considered high water quality. | | |
| | pH: 6-7 | | |
| | Conductivity (µs/cm): 40-80 | | |
| | TDS (ppm): 5-50 | | |
| Other | Both the water and the non-volatile fraction obtained are free of viruses and bacteria due to the vacuum conditions. | | |

A preferred embodiment of a system (10) for the separation of products, such as water-based products, by-products and waste, into a non-volatile fraction and a volatile fraction according to the second inventive step is shown in Figure 19.

The system (10) for the separation of products comprises:
- a vacuum evaporation device (1),
- a vacuum pump (12) coupled to the tubular member (2) by a connection means (9, 19), the vacuum pump (12) being adapted to generate a vacuum inside the interior of the tubular member (2),
- pressure measuring means (16) for measuring the pressure of the substantially airtight chamber,
- moisture content measuring means (17) for measuring the moisture content of the non-volatile fraction in the interior of the tubular member (2),
- means (24) for regulating the flow of the product to be treated entering the inlet (2.3) of the tubular member (2),
- means (22) for regulating the flow of the non-volatile fraction coming out from the first outlet (2.4) of the tubular member (2),
- a motor (15) connected to the stirrer (6) for rotating the stirrer (6) at a rotational speed, and
- control means (19) adapted to receive at least the values of: the rotational speed of the stirrer (4), the pressure of the substantially airtight chamber and the moisture content of the non-volatile fraction in the interior of the tubular member (2), and to command the system (10), on the basis of these actuations:
   - the actuation of the vacuum pump (12) to generate a specific vacuum in the interior of the tubular member (2),
   - the actuation of the means (24) for regulating the flow of the product to be treated entering the inlet (2.3) of the tubular member (2),
   - the actuation of the means (22) for regulating the flow of the non-volatile fraction coming out from the first outlet (2.4) of the tubular member (2), and
   - the actuation of the motor (15) to vary the rotational speed of the stirrer (6) and/or to vary the direction of the rotation of the stirrer (6) depending on the type of the product to be treated and/or the pressure of the substantially airtight chamber and the moisture content of the non-volatile fraction in the interior of the tubular member (2).

In this example of Figure 19, the vacuum evaporation device (1) is depicted in a horizontal position after installation. The vacuum evaporation device (1) comprises, in an upper part of one end, a first connection means (7) for the entry of the product to be treated and, in a lower end of the opposite side of the vacuum evaporation device (1), a second connection means (8) for the exit of the non-volatile fraction. A third connection means (9) for the outlet of the volatile fraction is arranged in an upper part of a central part of the vacuum evaporation device (1). Finally, a fourth connection means (29) for the outlet of the volatiles is also arranged at an upper part of the vacuum evaporation device (1). The first connection means (7) for the inlet of the product to be treated is connected to a product reservoir (25) by means of a first fluidic communication. Means (24) for regulating the flow of the product to be treated, preferably a pneumatic pinch valve, is arranged in the first fluidic communication between the first connection means (7) and the product reservoir (25) in order to control the opening or closing of the first fluidic communication so as to control the flow of the product to be treated. These means (24) for regulating the flow of the product to be treated are connected to the control means (19). The second connection means (8) for the exit of the non-volatile fraction is connected to a non-volatile fraction collector (23) by means of a second fluidic communication. Means (22) for regulating the flow of the non-volatile fraction and the vacuum conditions inside the second fluidic communication, preferably two pneumatic valves (22) connected in series, are arranged in the second fluidic communication between the second connection means (8) and the non-volatile fraction collector (23) so as to control the opening or closing of the second fluidic communication to control the flow of the non-volatile fraction and the vacuum conditions inside the second fluidic communication. These means (22) for regulating the flow of the non-volatile fraction and the vacuum conditions inside the second fluidic communication are connected to the control means (19). The third connection means (9) for the outlet of the volatile fraction is connected to a condensate collector (26) by means of a third fluidic communication. A condenser (20) for condensing the volatile fraction is arranged in the third fluidic communication between the third connection means (9) and the condensate collector (26). The optional fourth connection means (29) for the outlet of the volatiles is connected to a volatile collector (27) by means of a fourth fluidic communication. The condensate collector (26) and means (30) for regulating the flow of the volatile fraction, preferably a valve, are interposed between the volatile collector (27) and the fourth connection means (29). These means (30) for regulating the flow of the volatile fraction are connected to the control means (19).

In this example of Figure 19, the vacuum pump (12) is coupled to the interior of the tubular member (2) of the vacuum evaporation device (1) by the third and fourth connection means of the vacuum evaporation device. In particular, in this example of Figure 19, the third and fourth fluidic communication are connected through the condensate collector (26) and a vacuum pump (12) is connected to said condensate collector (26). Thus, a specific vacuum pressure is thus created along the third and fourth fluidic communications and also inside of the tubular member (2) of the vacuum evaporation device (1). The vacuum pump (12) is also connected to the control means (19).

In this example of Figure 19, the motor (15) is connected at one end of the stirrer (6) by a driving chain (28). The driving chain (28) is adapted to spin the longitudinal axis of the stirrer (6) at a rotational speed.

As can be seen from Figure 19, the system (10) includes pressure measuring means (16) for measuring the pressure of the substantially airtight chamber of the vacuum evaporation device (1). The pressure measuring means (16) may be one or a plurality of pressure sensors located at specific positions within the substantially airtight chamber and/or within the third and fourth fluid conduits which are also in the same vacuum conditions as the interior of the tubular member (2) of the vacuum evaporation device (1).

As can also be seen from Figure 19, the system (10) also includes moisture content measuring means (17) for measuring the moisture content of the non-volatile fraction inside the tubular member (2) of the vacuum evaporation device (1). The moisture content measuring means (17) may be one or a plurality of moisture content sensors located at specific positions within the substantially airtight chamber, preferably located close to the second connection means (8) for the outlet of the non-volatile fraction.

In this preferred embodiment of the system (10) shown in Figure 19, the vacuum evaporation device (1) corresponds to the embodiment of Figures 1 to 14, so that the heating means of the evaporation device (1) comprise an additional tubular member (3), thus forming a passageway (5) between the additional tubular member (3) and the tubular member (2) for the circulation of a heating fluid suitable for indirectly heating the interior of the evaporation device (1). Thus, the system (10) shown in Figure 19 further comprises:
- a tank (11), which, in the operating mode, comprises a heating fluid at a predetermined temperature, wherein the vacuum evaporation device (1) is connected to the tank (11) by means of a first fluidic communication and a second fluidic communication, wherein:
   - the first fluidic communication connects the tank (11) and the inlet (3.5) of the additional tubular member (3) for carrying the heating fluid from the tank (11) to the passageway (5), with the interposition of a pumping element (13) for the supply of heating fluid and means (14) for regulating the flow of the heating fluid in the first fluidic communication, and
   - the second fluidic communication connects the tank (11) and the outlet (3.6) of the additional tubular member (3) for carrying the heating fluid from the passageway (5) to the tank (11),
- heating means (10) for heating the heating fluid, and
- temperature measuring means of the heating fluid disposed at least at one point of the system (10) (not shown in Figure 19);
   wherein the control means (19) is further adapted to receive the temperature of the heating fluid at least at one point of the system, and to command, on the basis of these actuations:
   - the actuation of the means for regulating the flow of the heating fluid in the first fluidic communication (14), and
   - the actuation of the heating means for regulating the temperature of the heating fluid of the tank (10), when the temperature of the heating fluid measured by the temperature measuring means is close or outside a predetermined temperature range of the heating fluid.

In this example of Figure 19, the heating means are a boiler (21) connected to the tank (11) for the heating fluid.

## Claims

1. A vacuum evaporation device (1) for separating products, such as water-based products, by-products and waste, into a non-volatile fraction and a volatile fraction, the vacuum evaporation device (1) comprising:
- a tubular member (2) having,
- a length L2, an outer diameter D2ₒᵤₜ and an inner diameter D2ᵢₙ, wherein L2 is equal to or greater than 8 times D2ᵢₙ,
- an outer surface (2.1) and an inner surface (2.2) opposite the outer surface (2.1),
- first and second closed ends (2.7, 2.8) such that a substantially airtight chamber is formed in the interior of the tubular member (2),
the tubular member (2) further comprising:
- an inlet (2.3) for the entry of the product to be treated,
- a first outlet (2.4) for the discharge of the non-volatile fraction, and
- a second outlet (2.5) for the exit of the volatile fraction and optionally also for coupling a vacuum pump (12);
- heating means for heating at least a part of the outer surface (2.1) of the tubular member (2); and
- a stirrer (6) disposed along at least a part of the interior of the tubular member (2), the stirrer (6) being adapted to rotate.

2. The vacuum evaporation device (1) according to claim 1, wherein the heating means comprises:
- an additional tubular member (3) having,
- an inner diameter D3ᵢₙ, an outer surface (3.1) and an inner surface (3.2) opposite the outer surface (3.1), wherein the inner diameter D3ᵢₙ is greater than the outer diameter D2ₒᵤₜ,
the additional tubular member (3)
being arranged coaxially over at least a part of the tubular member (2) and
comprising first and second closed ends (3.3, 3.4) having respective inner surfaces, such that a passageway (5) is formed in the space between the at least a covered part of the outer surface (2.1) of the tubular member (2), the inner surface (3.2) of the additional tubular member (3) and the respective inner surfaces of the first (3.3) and second closed ends (3.4) of the additional tubular member (3),
the additional tubular member (3) further comprising:
- an inlet (3.5) for the entry of a heating fluid, and
- an outlet (3.6) for the exit of the heating fluid,
wherein the passageway (5) is adapted for the circulation of the heating fluid along the passageway (5) from the inlet (3.5) to the outlet (3.6) of the heating fluid; and
wherein the tubular member (2) comprises at least one set (2.6a) of fins protruding from and extending outwards from an area of the outer surface (2.1) of the tubular member (2) being covered by the additional tubular member (3), the at least one set (2.6a) of fins being adapted to direct the flow of the heating fluid inside the passageway (5).

3. The vacuum evaporation device (1) according to claim 1 or 2, wherein either the tubular member (2), the additional tubular member (3), or both, are made of a thermally conductive material, preferably a metal, and more preferably stainless steel.

4. The vacuum evaporation device (1) according to any of the preceding claims, wherein
the inlet (2.3) for the entry of the product to be treated is disposed at a first region of the tubular member (2) close to the first closed end (2.7),
the first outlet (2.4) for the discharge of the non-volatile fraction is disposed at a second region of the tubular member (2) close to the second closed end (2.8), and
the second outlet (2.5) for the exit of the volatile fraction is disposed at a third region of the tubular member (2) spaced apart from the first lateral part and the second lateral part.

5. The vacuum evaporation device (1) according to any of the preceding claims, wherein:
- the inlet (2.3) of the tubular member (2) comprises a first connection means (7) adapted for establishing a fluidic communication with the interior of the tubular member (2) for the entry of the product to be treated;
- the first outlet (2.4) of the tubular member (2) comprises a second connection means (8) adapted for establishing a fluidic communication with the interior of the tubular member (2) for the discharge of the non-volatile fraction; and
- the second outlet (2.5) of the tubular member comprises a third connection means (9) adapted for establishing a fluidic communication with the interior of the tubular member (2) for the exit of the volatile fraction and optionally also for the connection of a vacuum pump adapted to generate a vacuum inside the substantially airtight chamber.

6. The vacuum evaporation device (1) according to any of the preceding claims, wherein the tubular member (2) further comprises a third outlet (2.6) for coupling a vacuum pump (12) to generate a vacuum inside the substantially airtight chamber.

7. The vacuum evaporation device (1) according to claim 6, wherein the third outlet (2.6) comprises a fourth connection means (29) adapted for establishing a fluidic communication with the interior of the tubular member (2) for coupling the vacuum pump (12).

8. The vacuum evaporation device (1) according to any of the preceding claims, wherein the stirrer (6) occupies substantially the entire length of the tubular member (2), from the first end (2.3) to the second end (2.4) of the tubular member (2), so as to agitate the product to be treated in the entirety of the tubular member (2).

9. The vacuum evaporation device (1) according to any of the preceding claims, wherein the stirrer (6) extends in the longitudinal direction of the tubular member (2) with a helical configuration, the peripheral end parts of the helical configuration of the stirrer (6) contacting the inner surface (2.2) of the tubular member (2); preferably, the stirrer (6) with a helical configuration being a helical element further comprising a plurality of fibres, the helical element preferably being made of metal and more preferably of stainless steel.

10. The vacuum evaporation device (1) according to any of claims 2 to 9, wherein the tubular member (2) has a length L2 and the additional tubular member (3) has a length L3, wherein L3 is between 0.6 and 1 times L2.

11. The vacuum evaporation device (1) according to any of claims 2 to 10, wherein the tubular member (2) comprises two or more sets (2.6a, 2.6b) of fins protruding from its outer surface (2.1) and extending outwards, the total number of set of sets (2.6a, 2.6b) preferably being from 4 to 12, each set (2.6a, 2.6b) of fins being arranged in a respective circumferential region spaced apart from an adjacent circumferential region in which an adjacent set (2.6a, 2.6b) of fins is disposed.

12. The vacuum evaporation device (1) according to any of claims 2 to 11, wherein the at least one set (2.6a) of fins of the tubular member (2) comprises a plurality of fins (2.6') being distributed at spaced positions of a respective circumferential region of the outer surface (2.1) of the tubular member (2), the number of fins of the plurality of fins (2.6') preferably being from 8 to 24.

13. The vacuum evaporation device (1) according to any of claims 2 to 12, wherein the at least one set (2.6a) of fins of the tubular member (2) comprises a plurality of straight fins (2.6') extending from a respective region of the outer surface (2.1) along the outer surface of the tubular member (2) in respective directions inclined with respect to the longitudinal direction, the angle of inclination of the straight fins (2.6') with respect to the longitudinal direction preferably being from 15 to 30° and the length of the straight fins (2.6') preferably being from 10 to 40 cm.

14. A system (10) for the separation of products, such as water-based products, by-products and waste, into a non-volatile fraction and a volatile fraction, comprising:
- a vacuum evaporation device (1) according to any of the preceding claims,
- a vacuum pump (12) coupled to the tubular member (2) by a connection means (9, 19), the vacuum pump (12) being adapted to generate a vacuum inside the interior of the tubular member (2),
- pressure measuring means (16) for measuring the pressure of the substantially airtight chamber,
- moisture content measuring means (17) for measuring the moisture content of the non-volatile fraction in the interior of the tubular member (2),
- means (24) for regulating the flow of the product to be treated entering the inlet (2.3) of the tubular member (2),
- means (22) for regulating the flow of the non-volatile fraction coming out from the first outlet (2.4) of the tubular member (2),
- a motor (15) connected to the stirrer (6) for rotating the stirrer (6) at a rotational speed, and
- control means (19) adapted to receive at least the values of: the rotational speed of the stirrer (4), the pressure of the substantially airtight chamber and the moisture content of the non-volatile fraction in the interior of the tubular member (2), and to command the system (10), on the basis of these actuations:
- the actuation of the vacuum pump (12) to generate a specific vacuum in the interior of the tubular member (2),
- the actuation of the means (24) for regulating the flow of the product to be treated entering the inlet (2.3) of the tubular member (2),
- the actuation of the means (22) for regulating the flow of the non-volatile fraction coming out from the first outlet (2.4) of the tubular member (2), and
- the actuation of the motor (15) to vary the rotational speed of the stirrer (6) and/or to vary the direction of the rotation of the stirrer (6) depending on the type of the product to be treated and/or the pressure of the substantially airtight chamber and the moisture content of the non-volatile fraction in the interior of the tubular member (2).

15. A system (10) according to claim 14, when the vacuum evaporation device (1) is according to any of claims 2 to 13, the system (10) further comprises:
- a tank (11), which, in the operating mode, comprises a heating fluid at a predetermined temperature, wherein the vacuum evaporation device (1) is connected to the tank (11) by means of a first fluidic communication and a second fluidic communication, wherein:
- the first fluidic communication connects the tank (11) and the inlet (3.5) of the additional tubular member (3) for carrying the heating fluid from the tank (11) to the passageway (5), with the interposition of a pumping element (13) for the supply of heating fluid and means (14) for regulating the flow of the heating fluid in the first fluidic communication, and
- the second fluidic connects the tank (11) and the outlet (3.6) of the additional tubular member (3) for carrying the heating fluid from the passageway (5) to the tank (11),
- heating means (10) for heating the heating fluid, and
- temperature measuring means of the heating fluid disposed at least at one point of the system (10);
wherein the control means (19) is further adapted to receive the temperature of the heating fluid at least at one point of the system, and to command, on the basis of these actuations:
- the actuation of the means (14) for regulating the flow of the heating fluid in the first fluidic communication, and
- the actuation of the heating means for regulating the temperature of the heating fluid of the tank (10), when the temperature of the heating fluid measured by the temperature measuring means is close or outside a predetermined temperature range of the heating fluid.

16. The system (10) according to claim 14 or 15, further comprising one or more additional vacuum evaporation devices (1), wherein two adjacent vacuum evaporation devices (1) are connected in series or in parallel.
